# EUROPÄISCHE PATENTSCHRIFT

(11) **EP 4 649 052 B1**
(45) Veröffentlichungstag und Bekanntmachung des Hinweises auf die Patenterteilung: **05.08.2026**
(21) Anmeldenummer: 25716997.9
(22) Anmeldetag: 02.04.2025
(51) Int. Cl.: C01B 21/26, C01B 21/28

(54) **SICHERE HERSTELLUNG VON SALPETERSÄURE NACH DEM ZWEIDRUCKVERFAHREN**
SAFE PRODUCTION OF NITRIC ACID ACCORDING TO THE DUAL-PRESSURE PROCESS
PRODUCTION SÛRE D'ACIDE NITRIQUE SELON UN PROCÉDÉ À PRESSION DOUBLE

(30) Priorität: 04.04.2024 DE 102024109431; 04.04.2024 LU 103275
(43) Veröffentlichungstag der Anmeldung: 19.11.2025
(73) Patentinhaber: thyssenkrupp Uhde GmbH, 44141 Dortmund (DE); thyssenkrupp AG, 45143 Essen (DE)
(72) Erfinder: DAMMEIER, Johannes, 44143 Dortmund (DE)
(74) Vertreter: thyssenkrupp Intellectual Property GmbH
(86) Internationale Anmeldenummer: PCT/EP2025/058972
(87) Internationale Veröffentlichungsnummer: WO 2025/210079

(56) Entgegenhaltungen:
- EP-A1- 4 238 932
- US-B2- 11 292 719
- US-B2- 7 118 723

## Beschreibung

Die Erfindung betrifft eine Vorrichtung und ein Verfahren zur Vermeidung von potentiell gefährlichen Ablagerungen innerhalb einer Anlage zur Herstellung von Salpetersäure.

Großtechnisch wird Salpetersäure nach dem Ostwald-Verfahren gewonnen. Der erste Schritt die Oxidation von Ammoniak zu NO, anschließend die weitere Oxidation und anschließend die Absorption zur Erzeugung einer beispielsweise 60 Gew.-%igen Salpetersäure.

Aus der DE 10 2017 201 180 A1 ist ein Verfahren zur Herstellung von Salpetersäure und eine dafür geeignete Anlage gezeigt.

Aus der US 7 118 723 B2 ist ein Verfahren zur Herstellung von Salpetersäure bekannt.

Aus der US 11 292 719 B2 ist eine Anlage zur Herstellung von Salpetersäure bekannt
Aus der EP 4 238 932 A1 ist ein Zweidruckverfahren zur Herstellung von Salpetersäure bekannt.

Bei einer nicht vollständigen Umsetzung des Ammoniaks kann es dazu kommen, dass sich innerhalb der Vorrichtung Ammoniumnitrat und/oder Ammoniumnitrit bildet. Beide sind insbesondere in trockener Form kritisch, da diese mechanisch zur Umsetzung gebracht werden können. Hierbei ist das Ammoniumnitrit, welches eher bei basischen Umgebungsbedingungen entsteht, prinzipiell kritischer zu bewerten als das eher unter sauren Bedingungen entstehende Ammoniumnitrat.

Besonders kritisch können solche Feststoffe sein, wenn diese in den Verdichter zwischen dem Kondensor und dem Absorptionsturm gelangen oder sich aus der Gasphase im Verdichter als Feststoff abscheiden, da hier am ehesten mechanische Beanspruchungen auftreten. Solche Verdichter werden in einer Variante des Ostwaldverfahrens ("Zweidruckverfahren") verwendet.

Zu einem Ammoniakschlupf, also einer unvollständigen Umsetzung von Ammoniak zu NO kann es beispielsweise kommen, wenn der Katalysator (Stellenweise) beschädigt ist oder es zu einer inhomogenen Strömung über den Katalysator kommt. Insbesondere beim Starten von Salpetersäureanlagen tritt Ammoniakschlupf auf, da der Primärkatalysator seine Betriebstemperatur noch nicht erreicht hat und dadurch eine geringere Reaktivität aufweist.

Kommt es zu einem solchen Ammoniakschlupf, so finden sich in der weiteren Anlage stromab sowohl NO und die Folgeprodukte bis zur Salpetersäure neben dem Ammoniak, sodass es zu Bildung von Ammoniumnitrat oder Ammoniumnitrit kommen kann.

Aufgabe der Erfindung ist es, die Sicherheit auch bei einem auftretenden Ammoniakschlupf sicher zu stellen.

Gelöst wird diese Aufgabe durch die Vorrichtung mit den in Anspruch 1 angegebenen Merkmalen sowie durch das Verfahren mit den in Anspruch 9 angegebenen Merkmalen. Vorteilhafte Weiterbildungen ergeben sich aus den Unteransprüchen, der nachfolgenden Beschreibung sowie den Zeichnungen.

Die erfindungsgemäße Vorrichtung dient zur Erzeugung von Salpetersäure aus Ammoniak. Hierbei handelt es sich um das sogenannte Ostwald-Verfahren. Die Vorrichtung weist einen ersten Oxidationsreaktor, wenigstens einen ersten Wärmetauscher, einen ersten Kondensator, einen NO-Verdichter und einen Absorptionsturm auf. Der Oxidationsreaktor ist über eine erste Verbindung zur Überführung des NOₓ-Gasgemisches (des Oxidationsprodukts) mit dem wenigstens einen ersten Wärmetauscher verbunden. Üblicherweise werden mehrere erste Wärmetauscher hintereinander in Reihe betrieben, um eine ausreichende Abkühlung des Oxidationsprodukts zu erreichen. Die Oxidation erfolgt in der Größenordnung um 1000 C, meist zwischen 800 °C und 950 °C, während im ersten Kondensator schließlich die Temperatur eher um 100 °C liegt, üblicherweise zwischen 50 °C und 60 °C. Der erste Kondensator ist hierbei üblicherweise selber als Wärmetauscher ausgebildet, in dem der letzte Abkühlungsschritt erfolgt, der zur Kondensation führt. Durch die unterschiedlichen Wärmetauschstufen der mehreren ersten Wärmetauscher ist eine optimale Nutzung der thermischen Energie besser möglich. Der wenigstens eine erste Wärmetauscher ist über eine zweite Verbindung zur Überführung des NOₓ-Gasgemisches mit dem ersten Kondensator verbunden. Der erste Kondensator ist hierbei üblicherweise ebenfalls als Wärmetauscher ausgeführt, in dem das Temperaturniveau soweit abgesenkt wird, dass das bei der Verbrennung des Ammoniaks entstehende Wasser größtenteils auskondensieren kann. Hierbei scheidet sich auch ein Teil des NOₓ mit ab, sodass das Kondensat eine verdünnte Salpetersäure ist. Der erste Kondensator ist über eine dritte Verbindung zur Überführung des NOₓ-Gasgemisches mit dem NO-Verdichter verbunden. Eine Druckerhöhung erfolgt im Zweidruckverfahren, um die Effizienz der Absorption zu verbessern und so einen möglichst hohen Anteil an NOₓ in Salpetersäure umzuwandeln. Der NO-Verdichter ist über eine vierte Verbindung zur Überführung des NOₓ-Gasgemisches mit dem Absorptionsturm verbunden. Bei der Verdichtung wird das NOₓ-Gasgemisch jedoch wieder erwärmt, daher weist die vierte Verbindung üblicherweise einen zweiten Wärmetauscher und/oder einen zweiten Kondensator auf. Der erste Kondensator weist einen ersten Säureauslass auf. Dieser ist üblicherweise auf der Unterseite des ersten Kondensators im Bereich eines Sammelbehälters für die auskondensierte Salpetersäure angeordnet. Der zweite Kondensator weist einen dritten Säureauslass auf. Dieser ist üblicherweise auf der Unterseite des zweiten Kondensators im Bereich eines Sammelbehälters für die auskondensierte Salpetersäure angeordnet. Der erste Säureauslass ist üblicherweise über eine erste Säureleitung mit einem ersten Säureeinlass des Absorptionsturms verbunden. Der dritte Säureauslass ist üblicherweise über eine vierte Säureleitung mit dem Sammelbehälter für auskondensierte Salpetersäure des ersten Kondensators oder mit der Leitung für Salpetersäure, die Absorptionsturm und Bleichkolonne verbindet oder mit der zweiten Säureleitung verbunden. Der Absorptionsturm weist einen zweiten Säureauslass auf. Der zweite Säureauslass über eine zweite Säureleitung mit einem Produktauslass verbunden. Zwischen dem zweiten Säureauslass und dem Produktauslass kann beispielsweise noch eine Bleichkolonne und/oder ein Lagertank angeordnet sein. Der Absorptionsturm ist hierbei üblicherweise so aufgebaut, dass erste Säureeinlass so angeordnet ist, dass die verdünnte Salpetersäure mit dem NOₓ-reicheren NOₓ-Gas in einem Bereich der Kolonne mit entsprechender Säurekonzentration in Kontakt gebracht wird und dabei angereichert wird. Am oberen Ende des Absorptionsturms ist normalerweise eine Wasserzuführung angeordnet. Somit kommt das Wasser (mit der geringsten Salpetersäurekonzentration) mit dem NOₓ-ärmsten Gas in Kontakt, sodass die Absorption verbessert wird. Der NOₓ-Gasstrom wird im unteren Bereich zugeführt, der Gasauslass befindet sich am oberen Ende. Das NOₓ-haltige Gas strömt somit nach oben, während die Flüssigkeit nach unten strömt. Dadurch befindet sich das in der NOₓ-Konzentration abnehmende Gas im Kontakt mit immer verdünnterer Salpetersäure, um so eine besonders gute Absorption zu erreichen. Zusätzlich wird üblicherweise dem NOₓ-Gasstrom vor dem NO-Verdichter sauerstoffreiches Gas, zum Beispiel Luft, zugeführt, um durch oxidierende Bedingungen möglichst viel Salpetersäure zu erhalten und den Verlust an NO zu minimieren. Des Weiteren weist der Absorptionsturm üblicherweise eine integrierte Kühlvorrichtung auf, um die Reaktionswärme abzuführen.

Erfindungsgemäß ist der erste Säureauslass, der zweite Säureauslass oder der dritte Säureauslass über eine dritte Säureleitung mit dem ersten Kondensator und/oder der dritten Verbindung verbunden. Es wird also in den NOₓ-Gasstrom Salpetersäure eingesprüht und das in einem kondensierenden Temperaturfenster, in dem keine sofortige Verdampfung erfolgt. Vorteil der Verwendung der Salpetersäure gegenüber Wasser ist, dass ein saures Niveau vorliegt, was wiederum zur bevorzugten Bildung von Ammoniumnitrat anstelle von Ammoniumnitrit führt. Verwendet man Wasser, so kann bei Anwesenheit von Ammoniak ein basisches Milieu entstehen, was unbevorzugt die Bildung von Ammoniumnitrit gegenüber Ammoniumnitrat fördert. Darüber hinaus führt die Verwendung von zusätzlichem Wasser zu Verdünnung des Produkts Salpetersäure, was unerwünscht ist. Weiter erfolgt die Abscheidung eben vor dem NO-Verdichter. Im NO-Verdichter wären entsprechende Ablagerungen aufgrund der hohen mechanischen Belastung am gefährlichsten, sodass eine Abtrennung eben vor dem NO-Verdichter vorteilhaft ist, insbesondere gegenüber einer direkten Wasserzuführung vor und damit zum NO-Verdichter.

Vorteilhaft ist es, die eingespritzte Säure in einem Kreisstrom zu führen. Dabei kann die Säure über den Sumpf des ersten Kondensators beziehungsweise die Sümpfe der Kondensatoren, den Absorptionsturm oder sonstige Tanks und Leitungen geführt werden. Wesentlich ist, dass die Salpetersäure eben letztendlich aus dem ersten Säureauslass, dem zweiten Säureauslass oder dem dritten Säureauslass stammt, auch wenn diese beispielsweise einem dem nachgelagerten Lagertank entnommen wird.

Beispiele für diese Quellen sind beispielsweise ein Tropfsäuretank, ein Puffertank für nicht-spezifikationsgemäße Salpetersäure, ein Produktsäuretank oder ein speziell für diesen Zweck eingebauter Tank. Ebenso kommt die Entnahme aus einer salpetersäureführenden Leitung in Frage, insbesondere die erste Säureleitung, die zweite Säureleitung, oder die vierte Säureleitung. Die entsprechenden Quellen für die Salpetersäure sind mit dem ersten Kondensator zwecks Einspritzung mit der dritte Säureleitung verbunden. Zur Bereitstellung des benötigten Drucks für die Einspritzung kann die dritte Säureleitung eine Pumpe aufweisen. Alternativ kann ein verfahrensbedingt vorhandenes Druckgefälle ausgenutzt werden. Vorteilhaft ist es, sowieso vorhandene Pumpen wie Säurekondensatpumpen, Produktsäurepumpen, Füllpumpen oder Tropfsäurepumpen zu verwenden, die ein solches Druckgefälle bereits erzeugen.

In einer weiteren Ausführungsform der Erfindung weist die dritten Verbindung einen Flüssigkeitsabscheider auf. Beispielsweise und bevorzugt ist der Flüssigkeitsabscheider als Tröpfchenabscheider ausgebildet. Bevorzugt mündet die dritte Säureleitung in NO-Strömungsrichtung vor dem Flüssigkeitsabscheider in die dritte Verbindung. Hierdurch ist eine zuverlässige Abtrennung der Salpetersäure möglich, bevor diese in den NO-Verdichter gelangen kann. Weiter bevorzugt ist der Flüssigkeitsabscheider an der tiefsten Stelle der dritten Verbindung angeordnet. Hierdurch wird die Abscheidung der Salpetersäure unterstützt.

In einer weiteren Ausführungsform der Erfindung weist der erste Kondensator wenigstens eine Düse auf. Die Düse ist mit der dritte Säureleitung verbunden. Die Düse stellt somit die Verbindung zwischen der dritte Säureleitung und dem Inneren des ersten Kondensators dar. Die Einleitung in den ersten Kondensator ist besonders bevorzugt, da dort ohnehin Flüssigkeit abgetrennt wird, also zum einen seitens der Temperatur ideale Bildungen vorliegen, zum anderen die Flüssigkeit, die verdünnte Salpetersäure ohnehin gesammelt und zum Absorptionsturm überführt wird. Dadurch wird kein zusätzlicher apparativer Aufwand erzeugt. Zusätzlich ist der erste Kondensator materialtechnisch bereits auf den direkten Kontakt mit der korrosiven Salpetersäure ausgelegt, sodass auch hier kein zusätzlicher Materialaufwand bei der Auslegung für bisher nicht mit der flüssigen Säure in Kontakt stehenden Geräten kommt. Die Verwendung von Düsen sorgt für guten Kontakt zwischen flüssiger Salpetersäure und gasförmigem Ammoniak. Bei den Düsen kann es sich beispielsweise um Vollkegel- Hohlkegel- oder Flachstrahldüsen handeln.

In einer weiteren Ausführungsform der Erfindung weist die dritte Verbindung wenigstens eine Düse auf. Die Düse ist mit der dritten Säureleitung verbunden. Somit kann Salpetersäure in die dritte Verbindung aus der dritten Säureleitung eingesprüht werden.

In einer weiteren Ausführungsform der Erfindung weist der erste Kondensator eine NO-Seite auf. Da der erste Kondensator üblicherweise als Wärmetauscher ausgebildet ist, weist dieser üblicherweise neben der NO-Seite eine Wärmetauschmediumsseite auf, auf welcher beispielsweise Kühlwasser fließt und das NOₓ-Gasgemisch soweit abkühlt, dass es zur Kondensation kommt. Gleichzeitig kann so die Kondensationswärme in einfacher Weise effizient abgeführt werden. Die NO-Seite weist einen Kondensatorgaseinlass und einen Kondensatorgasauslass auf. Der Kondensatorgaseinlass ist mit der zweiten Verbindung verbunden, über den das NOₓ-Gasgemisch zugeführt wird. Der Kondensatorgasauslass ist mit der dritten Verbindung verbunden, von dort wird das NOₓ-Gasgemisch zum NO-Verdichter überführt. Somit erfolgt das Auskondensieren zwischen dem Kondensatorgaseinlass und den Kondensatorgasauslass. In einer Ausführung weist die NO-Seite weist wenigstens einen ersten Bereich mit einer aufwärts gerichteten Gasströmung und einen zweiten Bereich mit einer abwärts gerichteten Gasströmung auf. Hierbei ist der erste Bereich in Strömungsrichtung vor dem zweiten Bereich angeordnet. Bevorzugt kann der erste Kondensator mehrere aufeinanderfolgende Bereiche mit abwechseln aufwärts und abwärts gerichteter Gasströmung aufweisen. Aufwärts beziehungsweise abwärts im Sinne der Erfindung sind gegen beziehungsweise mit der Schwerkraft angeordnet. Die Düse ist oberhalb des ersten Bereichs mit aufwärtsgerichtetem Strom angeordnet. Somit wird die Salpetersäure in einen aufwärtsgerichteten Gasstrom eingesprüht und kann sich in dem darauf folgenden abwärts gerichteten Gasstrom dann einfacher wieder absetzen, zusammen mit der auskondensierten Salpetersäure aus dem Gasstrom.

Beispielsweise ist der erste Kondensator als Kreuzstrom-Wärmetauscher aufgeführt, in dem das Wärmetauschmedium, insbesondere Kühlwasser horizontal fließend, der Gasstrom alternierend auf- und abwärts jeweils quer zum Wärmetauschmedium. Durch die mehrfachen Richtungswechsel wird ein guter Wärmeaustausch ermöglicht.

In einer weiteren Ausführungsform der Erfindung weist der erste Kondensator einen ersten Teil und einen zweiten Teil auf. Der erste Kondensator bezüglich der NO-Seite spiegelsymmetrisch aufgebaut. Der Kondensatorgaseinlass ist mittig angeordnet. Der erste Teil weist entsprechend bevorzugt den Kondensatorgasauslass auf, der zweite Teil einen weiteren Kondensatorgasauslass. Der Kondensatorgasauslass und der weitere Kondensatorgasauslass sind entsprechend über eine Y-förmige dritte Verbindung mit dem NO-Verdichter verbunden. Hierdurch kann in einfacher Bauweise die Kontaktfläche und damit der Wärmeübergang in dem ersten Kondensator erhöht werden. Durch die spiegelsymmetrische Bauweise ergibt es sich, dass im ersten Teil und im zweiten Teil jeweils Salpeterseite in einen aufwärts gerichteten Gasstrom eingesprüht wird.

In einer weiteren Ausführungsform der Erfindung bestehen das Gehäuse des Kondensators und die Düse aus korrosionsbeständigem Material. Besonders bevorzugt bestehen das Gehäuse des Kondensators und die Düse aus dem gleichen korrosionsbeständigen Material.

In einem weiteren Aspekt betrifft die Erfindung ein Verfahren zur Herstellung von Salpetersäure. Das Verfahren weist die folgenden Schritte auf:
a) Oxidieren von Ammoniak mit Sauerstoff,
b) Abkühlen des Oxidationsprodukts
c) Auskondensieren des Oxidationsprodukts in einem ersten Kondensator,
d) Verdichten des Oxidationsprodukts,
e) Abkühlen des verdichteten Oxidationsprodukts,
f) Absorption zur Salpetersäure in einem Absorptionsturm.

Soweit entspricht das Verfahren dem bekannten Ostwald-Verfahren zur Herstellung von Salpetersäure aus Ammoniak und ist dem Fachmann umfänglich bekannt.

Erfindungsgemäß wird ein Teil der in Schritt c) oder der in Schritt f) erzeugten Salpetersäure im Schritt c) und/oder zwischen Schritt c) und Schritt d) in den Gasstrom des Oxidationsprodukts zurückgeführt, insbesondere eingesprüht. Durch die Verwendung von Salpetersäure wird ein saures Milieu sichergestellt, was eine Bildung von Ammoniumnitrat gegenüber Ammoniumnitrit bevorzugt und das Sicherheitsrisiko damit reduziert. Ebenfalls führt die Entfernung von möglicherweise vorhandenem Ammoniak vor dem Verdichten in Schritt d) dazu, dass sich Ammoniumnitrat und/oder Ammoniumnitrit insbesondere nicht innerhalb des NO-Verdichters absetzen kann und so einer besonderen mechanischen Belastung ausgesetzt wird. Durch das Versprühen, wird ein optimaler Kontakt zwischen der zurückgeführten flüssigen Phase und der Gasphase erreicht.

In einer weiteren Ausführungsform der Erfindung wird die eingesprühte Salpetersäure in einem Kreisstrom geführt.

In einer weiteren Ausführungsform der Erfindung erfolgt das Einsprühen im Gegenstrom zum Gasstrom des Oxidationsprodukts.

In einer weiteren Ausführungsform der Erfindung erfolgt nach dem Einsprühen eine Abtrennung einer flüssigen Phase. Da die flüssige Phase eben auch potentiell Ammoniumnitrat und/oder Ammoniumnitrit aufweisen kann, ist es vorteilhaft, die flüssige Phase vor dem NO-Verdichter zuverlässig abzutrennen.

In einer weiteren Ausführungsform der Erfindung erfolgt das Einsprühen bei einer Gasstromtemperatur von unter 150 °C.

In einer weiteren Ausführungsform der Erfindung wird das Verfahren nur zeitweise, beispielsweise nur in gewissen Zeitintervallen, beispielsweise alle vier Stunden für fünf Minuten angewendet. Hierdurch kann der Aufwand minimiert werden.

In einer weiterein Ausführungsform wird das erfindungsgemäße Verfahren während des Starts einer erfindungsgemäßen Vorrichtung durchgeführt, bis der Katalysator seine Betriebstemperatur von beispielsweise über 700 °C erreicht hat.

In einer weiteren Ausführungsform der Erfindung wird zusätzlich über einen Sensor die Ammoniak-Konzentration im Oxidationsprodukt erfasst und das Verfahren bei einer Überschreitung einer vorgegebenen Ammoniakkonzentration, welche vorzugsweise knapp oberhalb der Erfassungsgrenze liegt, durchgeführt. Somit ist die Anlage beispielsweise bei einem punktuellen Defekt des Oxidationskatalysators noch immer sicher weiter zu betreiben, beispielsweise bis der Oxidationskatalysator repariert oder ausgetauscht werden kann.

Nachfolgend ist die erfindungsgemäße Vorrichtung anhand eines in den Zeichnungen dargestellten Ausführungsbeispiels näher erläutert.
- Fig. 1: erste beispielhafte Vorrichtung
- Fig. 2: zweite beispielhafte Vorrichtung
- Fig. 3: Kondensator
- Fig. 4: dritte beispielhafte Vorrichtung

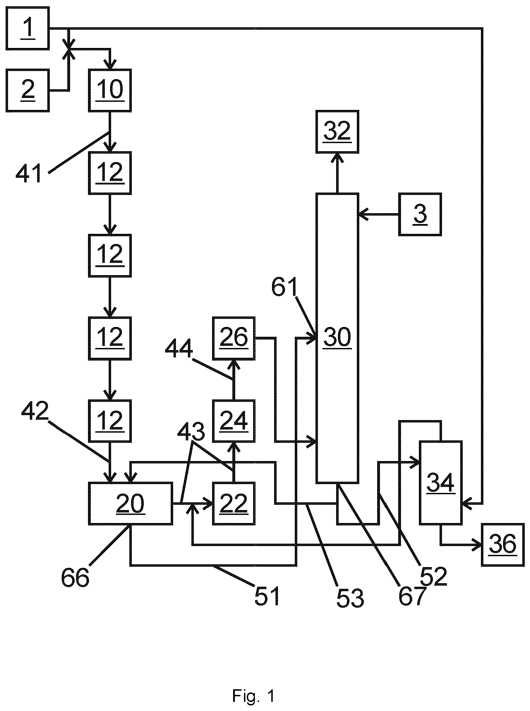

In Fig. 1 ist eine erste beispielhafte erfindungsgemäße Vorrichtung stark schematisiert und vereinfacht dargestellt. Insbesondere wurden die Wärmetauschströme in der Darstellung nicht dargestellt, da dieses sich stark überkreuzende Materialströme erzeugt und für die eigentliche Erfindung unbeachtlich ist und dem Fachmann aus dem Stand der Technik bekannt ist. Ebenso werden Verdichtungsstufen und die Entspannung des Produktgases ebenfalls aus diesen Gründen nicht dargestellt. Die Darstellung dient nur dazu, die Erfindung in den Kontext einer dem Fachmann bekannten Vorrichtung zur Herstellung von Salpetersäure aus Ammoniak einzuordnen.

Die Vorrichtung weist eine Sauerstoffquelle 1 und eine Ammoniakquelle 2 auf. Die Luftquelle 1 ist üblicherweise die Umgebungsluft, kann aber auch beispielsweise eine Luftzerlegungsanlage oder eine andere geeignete Sauerstoffquelle sein. Die Ammoniakquelle 2 ist üblicherweise ein Ammoniakverdampfer. Zusätzlich weist die Vorrichtung eine Wasserquelle 3 auf. Das Produkt wird letztendlich über den Produktauslass 36 entnommen.

Der Ammoniak und der Sauerstoff werden einem Oxidationsreaktor 10 zugeführt und zu NO umgesetzt. Das Oxidationsprodukt wird durch eine erste Verbindung 41 in eine Reihenschaltung von vier ersten Wärmetauschern 12 geleitet und dort stufenweise abgekühlt. Von dem letzten ersten Wärmetauscher 12 wird das vorgekühlte Oxidationsprodukt über die zweite Verbindung 42 in den ersten Kondensator 20 geleitet, der ebenfalls als Wärmetauscher ausgebildet ist und das Oxidationsprodukt unter die Kondensationstemperatur abkühlt, sodass verdünnte Salpetersäure auskondensiert. Das Oxidationsprodukt wird von dem ersten Kondensator 20 über die dritte Verbindung 43, welche einen Flüssigkeitsabscheider 22 aufweist, zum NO-Verdichter 24 geführt. Da das Oxidationsprodukt beim Verdichten erwärmt wird, wird das verdichtete Oxidationsprodukt über eine vierte Verbindung 44, die einen zweiten Wärmetauscher 26 aufweist, in den Absorptionsturm 30 geführt.

Der Absorptionsturm 30 dient dazu, dass bei der Oxidation aus dem Ammoniak erzeugte NOₓ in Wasser als Salpetersäure zu lösen und so das Produkt bereitzustellen. Dazu wird am oberen Ende Wasser aus der Wasserquelle 3 zugeführt und im Gegenstrom wird dazu das Oxidationsprodukt unten zugeführt. Die verdünnte Salpetersäure aus dem ersten Kondensator 20 wird entsprechend über die erste Säureleitung 51 und den ersten Säureeinlass 61 eher mittig in den Absorptionsturm 30 zugeführt. Gleichzeitig wird der Absorptionsturm 30 üblicherweise gekühlt, um die Reaktionswärme abzuführen und so die Ausbeute zu erhöhen. Das den Absorptionsturm 30 verlassende Gas wird einer Abgasreinigung 32 zugeführt. Da Produkt, die Salpetersäure, wird über den zweiten Säureauslass 67 und die daran anschließende zweite Säureleitung 52 entnommen und über eine Bleichkolonne 34 dem Produktauslass 36 zugeführt. In der Bleichkolonne 34 wird beispielswiese mit Luft, aus der Sauerstoffquelle 1 in der Salpetersäure gelöstes NOₓ ausgegast und als Gasgemisch der dritten Verbindung 43 zugeführt um eine Aufoxidation des NO beziehungsweise NO₂ zu HNO₃ zu ermöglichen.

Soweit entspricht die Vorrichtung einer Vorrichtung nach dem Stand der Technik.

Erfindungswesentlich ist nun eine dritte Säureleitung 53 vorhanden, welche Salpetersäure vom zweiten Säureauslass 67 des Absorptionsturms 30 in den ersten Kondensator 20 zurückgeführt wird. Dadurch kann dort Ammoniak, welches nicht oxidiert den Oxidationsreaktor durchquert hat, als Ammoniumnitrat gebunden und so aus dem Gasstrom in zuverlässiger Weise entfernt werden.

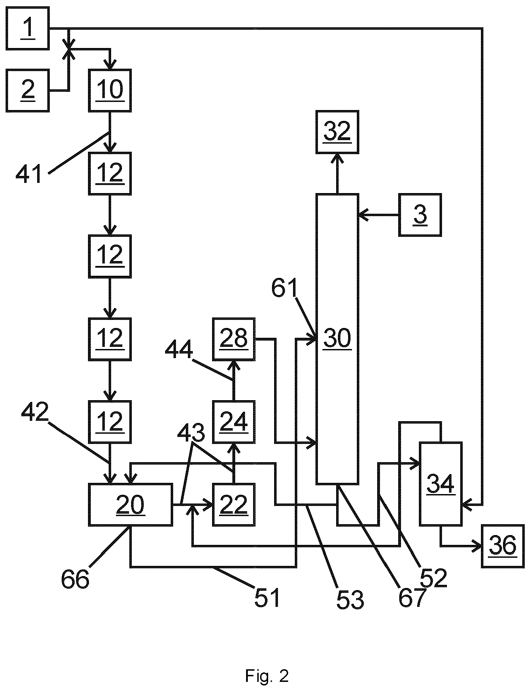

Die in Fig. 2 gezeigte zweite beispielhafte Vorrichtung unterscheidet sich von der in Fig. 1 gezeigten ersten beispielhaften Vorrichtung dadurch, dass anstelle des zweiten Wärmetauschers 26 ein zweiter Kondensator 28 angeordnet ist.

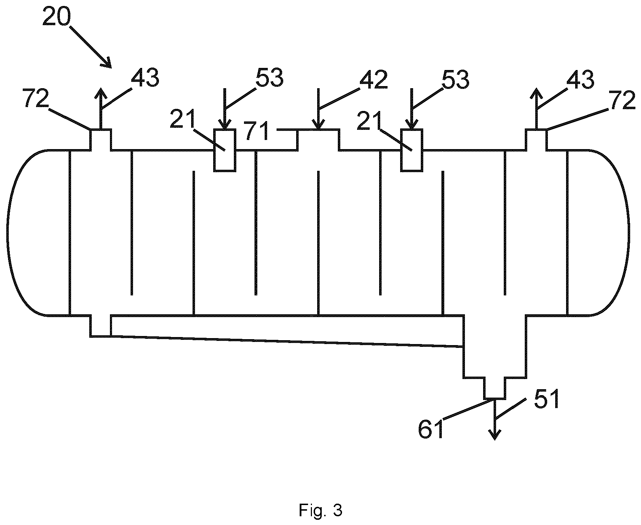

Fig. 3 zeigt einen beispielhaften und bevorzugte ersten Kondensator 20 im Querschnitt der NO-Seite. Der erste Kondensator 20 ist bezüglich der NO-Seite symmetrisch aufgebaut, das bedeutet, das mittig ein Kondensatorgaseinlass 71 angeordnet ist, über welchen das aus der zweiten Verbindung 42 kommende NOₓ-Gasgemisch zugeführt wird. Rechts und links ist jeweils ein Kondensatorgasauslass 72 angeordnet, über welche das NOₓ-Gasgemisch der dritten Verbindung 43 zugeführt wird. Zusätzlich weist der erste Kondensator 20 auf der Unterseite einen ersten Säureauslass 61 auf, über den die verdünnte Salpetersäure durch die erste Säureleitung 51 dem Absorptionsturm 30 zugeführt wird.

Der Gasweg im ersten Kondensator 20 weist je Seite mehrere Bereiche mit abwechselnd abwärts gerichteter Strömung und aufwärts gerichteter Strömung auf. An den Kondensatorgaseinlass 71 schließt sich ein nullter Bereich mit einer abwärts gerichteten Strömung an, daran schließ sich ein erster Bereich mit einer aufwärts gerichteten Strömung an, daran schließt sich ein zweiter Bereich mit einer abwärts gerichteten Strömung an, daran schließt sich ein dritter Bereich mit einer aufwärts gerichteten Strömung an. Oberhalb der beiden ersten Bereich ist jeweils eine Düse 21 angeordnet, welche mit der dritten Säureleitung 53 verbunden sind. Durch die Düsen 21 wird somit Salpetersäure aus dem Absorptionsturm 30 in den Gasstrom eingesprüht, wobei diese sich im zweiten Bereich wieder gut absetzen und somit über den ersten Säureauslass 51 zurückgeführt werden kann.

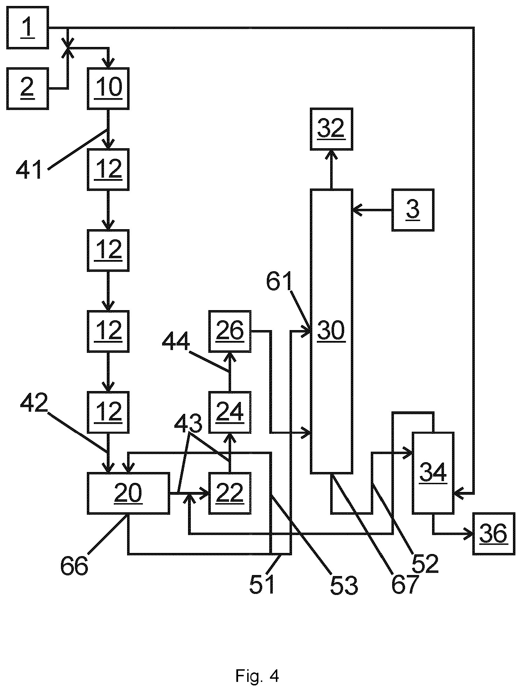

Die in Fig. 4 gezeigte dritte beispielhafte Vorrichtung unterscheidet sich von der in Fig. 1 gezeigten ersten beispielhaften Vorrichtung dadurch, dass dritte Säureleitung 53vom ersten Säureauslass 66 Salpetersäure in den ersten Kondensator 20 zurückführt.

### Bezugszeichen

- 1: Sauerstoffquelle
- 2: Ammoniakquelle
- 3: Wasserquelle
- 10: Oxidationsreaktor
- 12: erster Wärmetauscher
- 20: erster Kondensator
- 21: Düse
- 22: Flüssigkeitsabscheider
- 24: NO-Verdichter
- 26: zweiter Wärmetauscher
- 28: zweiter Kondensator
- 30: Absorptionsturm
- 32: Abgasreinigung
- 34: Bleichkolonne
- 36: Produktauslass
- 41: erste Verbindung
- 42: zweite Verbindung
- 43: dritte Verbindung
- 44: vierte Verbindung
- 51: erste Säureleitung
- 52: zweite Säureleitung
- 53: dritte Säureleitung
- 61: erster Säureeinlass
- 66: erste Säureauslass
- 67: zweite Säureauslass
- 71: Kondensatorgaseinlass
- 72: Kondensatorgasauslass

## Patentansprüche

1. Vorrichtung zur Erzeugung von Salpetersäure aus Ammoniak, wobei die Vorrichtung einen ersten Oxidationsreaktor (10), wenigstens einen ersten Wärmetauscher (12), einen ersten Kondensator (20), einen NO-Verdichter (24) und einen Absorptionsturm (30) aufweist, wobei der Oxidationsreaktor (10) über eine erste Verbindung (41) zur Überführung des NOₓ-Gasgemisches mit dem wenigstens einen ersten Wärmetauscher (12) verbunden ist, wobei der wenigstens eine erste Wärmetauscher (12) über eine zweite Verbindung (42) zur Überführung des NOₓ-Gasgemisches mit dem ersten Kondensator (20) verbunden ist, wobei der erste Kondensator (20) über eine dritte Verbindung (43) zur Überführung des NOₓ-Gasgemisches mit dem NO-Verdichter (24) verbunden ist, wobei der NO-Verdichter (24) über eine vierte Verbindung (44) zur Überführung des NOₓ-Gasgemisches mit dem Absorptionsturm (30) verbunden ist, wobei der erste Kondensator (20) einen ersten Säureauslass (66) aufweist, wobei der erste Säureauslass (66) über eine erste Säureleitung (51) mit einem ersten Säureeinlass (61) des Absorptionsturms (30) verbunden ist, wobei der Absorptionsturm (30) einen zweiten Säureauslass (67) aufweist, wobei der zweite Säureauslass (67) über eine zweite Säureleitung (52) mit einem Produktauslass (36) verbunden ist, **dadurch gekennzeichnet, dass** der erste Säureauslass (66) oder der zweite Säureauslass (67) über eine dritte Säureleitung (53) mit dem ersten Kondensator (20) und/oder der dritten Verbindung (43) verbunden ist.

2. Vorrichtung nach Anspruch 1, **dadurch gekennzeichnet, dass** die dritte Verbindung (43) einen Flüssigkeitsabscheider (22) aufweist.

3. Vorrichtung nach Anspruch 2, **dadurch gekennzeichnet, dass** die dritte Säureleitung (53) in NO-Strömungsrichtung vor dem Flüssigkeitsabscheider (22) in die dritte Verbindung (43) mündet.

4. Vorrichtung nach einem der Ansprüche 2 bis 3, **dadurch gekennzeichnet, dass** der Flüssigkeitsabscheider (22) an der tiefsten Stelle der dritten Verbindung (43) angeordnet ist.

5. Vorrichtung nach einem der vorstehenden Ansprüche, **dadurch gekennzeichnet, dass** der erste Kondensator (20) wenigstens eine Düse (21) aufweist, wobei die Düse (21) mit der dritten Säureleitung (53) verbunden ist.

6. Vorrichtung nach Anspruch 5, **dadurch gekennzeichnet, dass** der erste Kondensator (20) eine NO-Seite aufweist, wobei die NO-Seite einen Kondensatorgaseinlass (71) und einen Kondensatorgasauslass (72) aufweist, wobei der Kondensatorgaseinlass (71) mit der zweiten Verbindung (42) verbunden ist, wobei der Kondensatorgasauslass (72) mit der dritten Verbindung (43) verbunden ist, wobei die NO-Seite wenigstens einen ersten Bereich mit einer aufwärts gerichteten Gasströmung und einen zweiten Bereich mit einer abwärts gerichteten Gasströmung aufweist, wobei die Düse (21) oberhalb des ersten Bereichs angeordnet ist.

7. Vorrichtung nach Anspruch 6, **dadurch gekennzeichnet, dass** der erste Kondensator (20) einen ersten Teil und einen zweiten Teil aufweist, wobei der erste Kondensator (20) bezüglich der NO-Seite spiegelsymmetrisch aufgebaut ist, wobei der Kondensatorgaseinlass (71) mittig angeordnet ist.

8. Vorrichtung nach einem der Ansprüche 5 bis 7, **dadurch gekennzeichnet, dass** das Gehäuse des ersten Kondensators (20) und die Düse (21) aus korrosionsbeständigem Material bestehen.

9. Verfahren zur Herstellung von Salpetersäure, wobei das Verfahren die folgenden Schritte aufweist:
a) Oxidieren von Ammoniak mit Sauerstoff,
b) Abkühlen des Oxidationsprodukts
c) Auskondensieren des Oxidationsprodukts in einem ersten Kondensator (20),
d) Verdichten des Oxidationsprodukts,
e) Abkühlen des verdichteten Oxidationsprodukts,
f) Absorption zur Salpetersäure in einem Absorptionsturm (30),
wobei ein Teil der in Schritt c) oder der in Schritt f) erzeugten Salpetersäure im Schritt c) und/oder zwischen Schritt c) und Schritt d) in den Gasstrom des Oxidationsprodukts zurückgeführt, insbesondere eingesprüht, wird.

10. Verfahren nach Anspruch 9, **dadurch gekennzeichnet, dass** die eingesprühte Salpetersäure in einem Kreisstrom geführt wird.

11. Verfahren nach einem der Ansprüche 9 bis 10, **dadurch gekennzeichnet, dass** das Einsprühen im Gegenstrom zum Gasstrom des Oxidationsprodukts erfolgt.

12. Verfahren nach einem der Ansprüche 9 bis 11, **dadurch gekennzeichnet, dass** nach dem Einsprühen eine Abtrennung einer flüssigen Phase erfolgt.

13. Verfahren nach einem der Ansprüche 9 bis 12, **dadurch gekennzeichnet, dass** das Einsprühen bei einer Gasstromtemperatur von unter 150 °C erfolgt.

## Claims

1. Apparatus for producing nitric acid from ammonia, the apparatus comprising a first oxidation reactor (10), at least one first heat exchanger (12), a first condenser (20), an NO compressor (24) and an absorption tower (30), wherein the oxidation reactor (10) is connected via a first connection (41) for transferring the NOₓ gas mixture to the at least one first heat exchanger (12), wherein the at least one first heat exchanger (12) is connected via a second connection (42) for transferring the NOₓ gas mixture via a second connection (42), wherein the first condenser (20) is connected to the NOₓ gas mixture via a third connection (43) for conveying the NO(x) gas mixture to the NO compressor (24), wherein the NO compressor (24) is connected to the NOₓ gas mixture to the absorption tower (30), wherein the first condenser (20) comprises a first acid outlet (66), wherein the first acid outlet (66) is connected via a first acid line (51) to a first acid inlet (61) of the absorption tower (30) via a first acid line (51), wherein the absorption tower (30) comprises a second acid outlet (67), wherein the second acid outlet (67) is connected to a product outlet (36) via a second acid line (52), **characterised in that** the first acid outlet (66) or the second acid outlet (67) is connected via a third acid line (53) to the first condenser (20) and/or the third connection (43).

2. Apparatus according to claim 1, **characterised in that** the third connection (43) comprises a liquid separator (22).

3. Apparatus according to claim 2, **characterised in that** the third acid line (53) opens into the third connection (43) upstream of the liquid separator (22) in the direction of NO flow.

4. Apparatus according to any one of claims 2 to 3, **characterised in that** the liquid separator (22) is arranged at the lowest point of the third connection (43).

5. Apparatus according to one of the preceding claims, **characterised in that** the first condenser (20) comprises at least one nozzle (21), wherein the nozzle (21) is connected to the third acid line (53).

6. Apparatus according to claim 5, **characterised in that** the first condenser (20) comprises an NO side, wherein the NO side comprises a condenser gas inlet (71) and a condenser gas outlet (72), wherein the condenser gas inlet (71) is connected to the second connection (42), wherein the condenser gas outlet (72) is connected to the third connection (43), wherein the NO side comprises at least a first region with an upward gas flow and a second region with a downward gas flow, wherein the nozzle (21) is arranged above the first region.

7. Apparatus according to claim 6, **characterised in that** the first condenser (20) comprises a first part and a second part, wherein the first condenser (20) is constructed to be mirror-symmetrical with respect to the NO side, and wherein the condenser gas inlet (71) is centrally located.

8. Apparatus according to any one of claims 5 to 7, **characterised in that** the housing of the first condenser (20) and the nozzle (21) are made of corrosion-resistant material.

9. A process for the production of nitric acid, wherein the process comprises the following steps:
a) oxidising ammonia with oxygen,
b) cooling the oxidation product
c) condensing the oxidation product in a first condenser (20),
d) compressing the oxidation product,
e) cooling the compressed oxidation product,
f) Absorption into nitric acid in an absorption tower (30),
wherein a portion of the nitric acid produced in step c) or in step f) is recycled into the gas stream of the oxidation product in step c) and/or between step c) and step d), in particular by spraying.

10. A process according to claim 9, **characterised in that** the sprayed nitric acid is circulated in a closed loop.

11. A process according to any one of claims 9 to 10 , **characterised in that** the spraying takes place in counter-current to the gas stream of the oxidation product.

12. A process according to any one of claims 9 to 11, **characterised in that,** after injection, a liquid phase is separated.

13. A process according to any one of claims 9 to 12, **characterised in that** the spraying takes place at a gas flow temperature of less than 150 °C.

## Revendications

1. Dispositif pour la production d'acide nitrique à partir d'ammoniac, le dispositif comprenant un premier réacteur d'oxydation (10), au moins un premier échangeur de chaleur (12), un premier condenseur (20), un compresseur de NO (24) et une tour d'absorption (30), dans lequel le réacteur d'oxydation (10) est relié, via une première connexion (41), pour transférer le mélange gazeux de NOₓ vers le ou les premiers échangeurs de chaleur (12), le ou les premiers échangeurs de chaleur (12) étant reliés par une deuxième connexion (42) pour transférer le mélange gazeux de NOₓvia une deuxième connexion (42), le premier condenseur (20) étant relié au mélange gazeux de NOₓ par l'intermédiaire d'une troisième connexion (43) destinée à acheminer le mélange gazeux de NO(x) vers le compresseur de NO (24), dans lequel le compresseur de NO (24) est relié au mélange gazeux de NOₓ vers la tour d'absorption (30), dans lequel le premier condenseur (20) comprend une première sortie d'acide (66), dans lequel la première sortie d'acide (66) est reliée, via une première conduite d'acide (51), à une première entrée d'acide (61) de la tour d'absorption (30) via une première conduite d'acide (51), dans lequel la tour d'absorption (30) comprend une deuxième sortie d'acide (67), dans lequel la deuxième sortie d'acide (67) est reliée à une sortie de produit (36) via une deuxième conduite d'acide (52), **caractérisé en ce qu'** , la première sortie d'acide (66) ou la deuxième sortie d'acide (67) est reliée, par l'intermédiaire d'une troisième conduite d'acide (53), au premier condenseur (20) et/ou au troisième raccord (43).

2. Dispositif selon la revendication 1, **caractérisé en ce que** le troisième raccord (43) comprend un séparateur de liquide (22).

3. Dispositif selon la revendication 2, **caractérisé en ce que** la troisième conduite d'acide (53) débouche dans le troisième raccord (43) en amont du séparateur de liquide (22) dans le sens de l'écoulement du NO.

4. Dispositif selon l'une quelconque des revendications 2 à 3, **caractérisé en ce que** le séparateur de liquide (22) est disposé au point le plus bas du troisième raccord (43).

5. Dispositif selon l'une des revendications précédentes, **caractérisé en ce que** le premier condenseur (20) comprend au moins une buse (21), la buse (21) étant raccordée à la troisième conduite d'acide (53).

6. Dispositif selon la revendication 5, **caractérisé en ce que** le premier condenseur (20) comprend un côté NO, ledit côté NO comprenant une entrée de gaz du condenseur (71) et une sortie de gaz du condenseur (72), l'entrée de gaz du condenseur (71) étant raccordée au deuxième raccord (42), et la sortie de gaz du condenseur (72) étant raccordée au troisième raccord (43), le côté NO comprenant au moins une première zone avec un écoulement de gaz ascendant et une deuxième zone avec un écoulement de gaz descendant, la buse (21) étant disposée au-dessus de la première zone.

7. Dispositif selon la revendication 6, **caractérisé en ce que** le premier condenseur (20) comprend une première partie et une deuxième partie, le premier condenseur (20) étant conçu pour être symétrique par rapport au côté NO, et l'entrée de gaz du condenseur (71) étant située au centre.

8. Dispositif selon l'une quelconque des revendications 5 à 7, **caractérisé en ce que** le boîtier du premier condenseur (20) et la buse (21) sont réalisés en un matériau résistant à la corrosion.

9. Procédé de production d'acide nitrique, dans lequel le procédé d' e comprend les étapes suivantes :
a) l'oxydation de l'ammoniac avec de l'oxygène,
b) le refroidissement du produit d'oxydation
c) la condensation du produit d'oxydation dans un premier condenseur (20),
d) compression du produit d'oxydation,
e) refroidissement du produit d'oxydation comprimé,
f) absorption dans de l'acide nitrique dans une tour d'absorption (30),
dans lequel une partie de l'acide nitrique produit à l'étape c) ou à l'étape f) est recyclée dans le flux gazeux du produit d'oxydation à l'étape c) et/ou entre l'étape c) et l'étape d), notamment par pulvérisation.

10. Procédé selon la revendication 9, **caractérisé en ce que** l'acide nitrique pulvérisé circule en boucle fermée.

11. Procédé selon l'une quelconque des revendications 9 à 10 , **caractérisé en ce que** la pulvérisation s'effectue à contre-courant du flux gazeux du produit d'oxydation.

12. Procédé selon l'une quelconque des revendications 9 à 11, **caractérisé en ce que**, après l'injection, une phase liquide est séparée.

13. Procédé selon l'une quelconque des revendications 9 à 12, **caractérisé en ce que** la pulvérisation a lieu à une température du flux gazeux inférieure à 150 °C.
